# EUROPÄISCHE PATENTSCHRIFT

(11) **EP 3 578 440 B1**
(45) Veröffentlichungstag und Bekanntmachung des Hinweises auf die Patenterteilung: **03.05.2023**
(21) Anmeldenummer: 19179557.4
(22) Anmeldetag: 11.06.2019
(51) Int. Cl.: B62D 21/12, B62D 27/06, B62D 65/02, B62D 21/02

(54) **TRIEBKOPFANBINDUNG**
DRIVE HEAD CONNECTION
FIXATION D'AUTOMOTRICE

(30) Priorität: 08.06.2018 DE 102018113733
(43) Veröffentlichungstag der Anmeldung: 11.12.2019
(73) Patentinhaber: HYMER Business Development GmbH, 88339 Bad Waldsee (DE)
(72) Erfinder: Kaiser, Ria, 21077 Hamburg (DE); Weltjen, Martin, 21726 Oldendorf (DE)
(74) Vertreter: Waller, Stefan

(56) Entgegenhaltungen:
- EP-A1- 1 634 798
- DE-U1-202015 102 106
- US-A1- 2017 216 112
- US-A1- 2018 093 727

## Beschreibung

Die Erfindung betrifft ein Fahrzeugchassis für ein Landfahrzeug, insbesondere für ein Reisemobil oder ein Freizeitfahrzeug.

Bei Fahrzeugchassis, insbesondere bei Reisemobilen, finden üblicherweise vordere Chassismodule, insbesondere in Form sogenannter Triebköpfe oder Zugköpfe, als Antriebe Verwendung. Dabei werden sie an ein hinteres Chassismodul, ein sogenanntes Anbauchassis, angebracht. Aus dem Stand der Technik, beispielsweise aus der EP 1 634 798 B1 sind Verbindungsverfahren bekannt, welche unter Einsatz eines Adapters einen Zugkopf mit einem Anbauchassis verbinden.

Nachteilig an den bekannten Verfahren ist, dass am Triebkopf bzw. an dessen Triebkopfrahmen ein Bestandteil entfernt werden muss, um einen notwendigen Adapter zur Anbindung des hinteren Chassismoduls anzuschweißen. Dies bedeutet zusätzlichen Aufwand und einen erheblichen Eingriff in die Statik des Triebkopfes, was gegebenenfalls zu Problemen führen kann.

Aus der US 2018/093727 A1, der US 20170216112 A1 und der DE 202015102106 U1 sind Triebkopfanbindungen bekannt. Die US 2018/093727 A1 beschreibt ein Fahrzeugchassis gemäß dem Oberbegriff des Anspruchs 1.

Aufgabe der Erfindung ist es daher, ein Fahrzeugchassis für ein Landfahrzeug bereitzustellen, welches keinen oder zumindest nur unerhebliche Eingriffe in die Rahmenkonstruktion des vorderen Chassismoduls, insbesondere eines Triebkopfs erfordert.

Diese Aufgabe wird durch ein Fahrzeugchassis mit den Merkmalen des Patentanspruchhs 1 gelöst.

Durch das Aufstecken auf einen Abschnitt des Triebkopfrahmens oder das Einstecken in den Abschnitt des Triebkopfrahmens, wodurch eine formschlüssige Verbindung hergestellt wird, ist ohne Veränderung der tragenden Komponenten des Triebkopfes die Möglichkeit gegeben, das hintere Chassismodul an den Triebkopf anzubinden. Die formschlüssig aufgesteckte oder eingesteckte Anordnung zwischen Anschlussprofil und Abschnitt des Triebkopfrahmens, z.B. einem Träger des Triebkopfs, bedarf lediglich einer Fixierung gegen ein Abziehen, was durch entsprechend gesicherte Schraub- oder Bolzenverbindungen bereitgestellt werden kann.

In einer bevorzugten Ausführungsform ist vorgesehen, dass das Anschlussprofil ganz oder teilweise als Hohlprofil, insbesondere Vier-, Sechs- oder Achteckprofil ausgebildet ist.

Insbesondere eine Ausbildung in Übereinstimmung mit der Geometrie des Abschnitts des Triebkopfrahmens, welcher das Anschlussprofil aufnimmt oder in welchen es eingeschoben wird, ist besonders vorteilhaft.

Die Ausbildung als entsprechendes Vieleckprofil ermöglicht eine feste formschlüssige Verbindung, welche eine erhebliche Verwindungssteifheit und Orientierungstreue mit sich bringt.

In einer alternativen Ausführungsform ist vorgesehen, dass das Anschlussprofil den Triebkopfrahmen und das Rahmenmodul an Profilaußenseiten verbindet und bevorzugt mindestens eine Nut zur formschlüssigen Aufnahme eines Abschnitts des Triebkopfrahmens aufweist.

Die Aufbringung des Anschlussprofils, insbesondere einer Verbindungsplatte auf Profilaußenseiten des Triebkopfrahmens erlaubt eine vereinfachte Montage. Nimmt dieses Anschlussprofil nun noch Bestandteile des Triebkopfrahmens, beispielsweise Vorsprünge oder Kanten, formschlüssig auf, wird damit eine zusätzliche Stabilität der Verbindungsstruktur bereitgestellt.

In einer bevorzugten Ausführungsform ist vorgesehen, dass das Anschlussprofil mit dem Träger des Triebkopfs unlösbar verbunden, insbesondere verklebt oder verschweißt ist. Alternativ kann das Anschlussprofil auch verschraubt oder vernietet sein.

Die Befestigung des Anschlussprofils an dem Träger des Triebkopfs durch eine dauerhafte und unlösbare Befestigungsmethode, wie Verkleben oder Verschweißen, bietet eine prozesssichere Verbindung, welche mit geringen Material-, und Produktionskosten einhergeht. Durch das reine zusätzliche Aufbringen oder Einbringen von Material muss kein Eingriff in die Statik des Triebkopfs, insbesondere des Triebkopfrahmens erfolgen, so dass damit einhergehende Probleme und Prüfungen vermieden werden.

Es ist vorgesehen, dass das Anschlussprofil einen ersten Abschnitt und einen zweiten Abschnitt umfasst, wobei der erste Abschnitt eine Verbindung mit dem Triebkopf, insbesondere an einem Abschnitt des Triebkopfrahmens ausbildet und der zweite. Abschnitt eine Verbindung mit dem hinteren Chassismodul, insbesondere mit einem der Rahmenprofile ausbildet.

Die Ausbildung des Anschlussprofils in zwei Abschnitten erlaubt, je nach Geometrie oder verwendetem Material bzw. materieller Kontaktstelle, die jeweiligen mechanischen Eigenschaften optimal auszunutzen. Dabei kann beispielsweise der Abschnitt, welcher in den Träger des Triebkopfes eingeschoben oder auf diesen aufgesteckt wird, andere mechanische, insbesondere materialtechnisch bedingte Eigenschaften aufweisen, indem er beispielsweise aus Metall ist. Dahingegen kann derjenige Bestandteil, welcher mit dem hinteren Chassismodul in Verbindung steht, möglicherweise aus Faserverbundwerkstoffen besteht.

In einer Ausführung wird ein einheitliches Material genutzt, um die Fertigung des Anschlussprofils in seinen zwei Abschnitten zu vereinfachen.

Insbesondere ist vorgesehen, dass je Rahmenprofil des hinteren Chassismoduls mindestens ein Anschlussprofil, im Fall von Anschlussplatten sogar mindestens zwei Platten je Rahmenprofil vorgesehen sind. Die symmetrische Anordnung der Anschlussprofile auf der rechten und linken Fahrzeugseite bringt ein hohe Stabilität und leitet die Kräfte des Triebkopfrahmens optimal in das hintere Chassismodul ein.

Besonders bevorzugt, kann zwischen den beiden Abschnitten ein Blechelement oder ein Element aus anderem Material vorgesehen sein, welches insbesondere unter Ausbildung eines Kragens als Anschlag für den Träger des Triebkopfs dient.

Das betreffende Zwischenelement, insbesondere als Blechelement ausgebildet, bietet Stabilität gegen Verwindungen und kann zusätzlich die Positionierung beim Einstecken bzw. Aufstecken erleichtern und verbessern.

Es ist vorgesehen, dass der erste Abschnitt mindestens ein, vorzugsweise mehrere rohrförmige Elemente, insbesondere Rechteckrohre umfasst, wobei die rohrförmigen Elemente vorzugsweise unterschiedlich weit in den Träger des Triebkopfs hineinragen und in diesem befestigt sind.

Rohrförmige Elemente, insbesondere Rechteckrohre oder Rohre mit quadratischem Querschnitt lassen sich in dem Träger des Triebkopfs einbringen und erlauben z.B. durch Befestigung an bestimmten Schraubpunkten auch das Einbringen von Toleranzausgleichselementen durch Unterlegungen. Am außerhalb des Trägers des Triebkopfs liegenden Ende der rohrförmigen Elemente kann eine Platte oder können andere Komponenten zur Anbringung an einen Träger des hinteren Chassismoduls angeordnet sein, oder die rohrförmigen Elemente werden selbst dort befestigt oder aufgenommen.

Besonders bevorzugt ist vorgesehen, dass die rohrförmigen Elemente unterschiedliche Längen und damit Eindringtiefen in den Träger des Triebkopfs aufweisen. Je nach zur Verfügung stehendem Freiraum im Inneren des Trägers des Triebkopfs kann z.B. das untere rohrförmige Element weiter in den Träger des Triebkopfs hineinragen, als das obere rohrförmige Element. Dadurch kann z.B. an einem rohrförmigen Element eine verstärkt ausgebildete Befestigung, z.B. zur Übertagung von Zugkräften oder Scherkräften zur Verfügung gestellt werden.

In einer weiteren Ausführungsform ist vorgesehen, dass das Anschlussprofil als Druckgussplatte ausgebildet ist, und insbesondere eine Nut vom ersten Abschnitt bis zum zweiten Abschnitt verläuft.

Die Ausbildung als Druckgussplatte erlaubt eine präzise und kostengünstige Herstellung bei hoher Stabilität.

Die Erfindung soll an den folgend dargestellten Ausführungsbeispielen näher erläutert werden. Sie ist jedoch nicht auf die dargestellten Ausführungsformen beschränkt. Es zeigt dabei
- Fig. 1: einen Abschnitt eines Trägers eines Triebkopfes, welcher über ein Anschlussprofil an ein Z-Profil eines hinteren Chassismoduls angebunden ist,
- Fig. 2: einen Abschnitt eines Trägers eines Triebkopfes, welcher über ein Anschlussprofil mit zwei Rohrelementen an ein Z-Profil eines hinteren Chassismoduls angebunden ist und
- Fig. 3a-d: einen Abschnitt eines Trägers eines Triebkopfes, welcher über ein Anschlussprofil mit zwei Druckgussplatten an Z-Profile eines hinteren Chassismoduls angebunden ist.

Gleiche Bestandteile sind mit gleichen Bezugszeichen versehen.

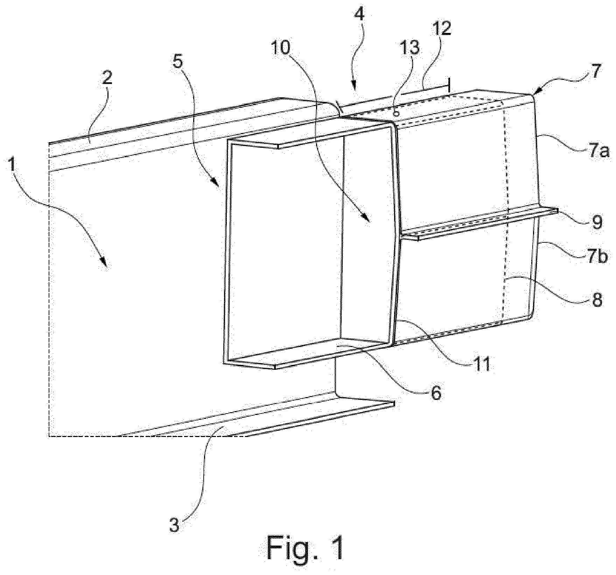

Im Einzelnen zeigt Fig. 1 einen Abschnitt eines Z-Profils 1, welches einen oberen Schenkel 2 und einen unteren Schenkel 3 aufweist. Das Z-Profil 1 ist beispielsweise an einem hinteren Chassismodul eines erfindungsgemäßen Fahrzeugchassis als tragendes und stabilisierendes Element vorgesehen und nimmt einen Unterboden und einen Laufboden (nicht dargestellt) auf den Schenkeln 2 bzw. 3 auf. Über das Z-Profil 1 erfolgt auch die Anbindung an die hintere Achse des Chassis, da dieses als tragendes Element wirkt. Derartige Profilaufbauten sind Bestandteil anderer Anmeldungen.

An dem Z-Profil 1 ist ein Anschlussprofil 4 angeordnet, welches auf der dem Z-Profil 1 zugewandten Seite 5 einen U-förmigen Profilabschnitt 6 aufweist. Weiterhin umfasst das Anschlussprofil 4 auf der einem Triebkopfrahmen 7 zugewandten Seite ein Sechseckprofil 8 (gestrichelt dargestellt) , welches zum Einstecken in einen Träger des Triebkopfrahmen 7, somit in einen Abschnitt 12 des Triebkopfrahmens 7 dimensioniert ist.

Beide Profile, sowohl das Z-Profil 1 als auch der Träger des Triebkopfrahmens 7 sind vorliegend aus Gründen der Übersichtlichkeit der Anbindung nur abschnittsweise dargestellt. Auf die aus dem Stand der Technik bekannte Anordnung derartiger Verbindungen wird Bezug genommen.

Der Träger des Triebkopfrahmens 7 ist vorliegend aus zwei aufeinander aufgesetzten U-Profilen 7a und 7b gebildet, welche an einem Kragen 9 miteinander verschweißt sind. Durch die aufeinander gesetzten U-Profile 7a und 7b entsteht ein sechseckiger Innenraum, in welchen das Sechseckprofil 8 des Anschlussprofils 4 eingeschoben und formschlüssig aufgenommen 5 wird.

Zwischen dem Sechseckprofil 8 und dem U-förmigen Profilabschnitt 6 des Anschlussprofils 4 ist ein Element 10 vorgesehen, welches einerseits das Sechseckprofil 8 zum U-förmigen Profilabschnitt 6 hin abschließt und andererseits dieses leicht überragt, so dass an seinem Außenumfang ein Anschlag 11 für den Träger des Triebkopfrahmens 7 entsteht.

Exemplarisch dargestellt kann über Bohrungen 13 für Verschraubungen oder Vernietungen eine feste Verbindung zwischen dem Anschlussprofil 4 und dem Träger des Treibkopfrahmens 7 hergestellt werden, oder es kann eine Verschweißung oder Verklebung im Bereich des Anschlags 11 vorgesehen sein.

Zwischen dem U-förmigen Profilabschnitt 6 und dem Z-Profil 1 kann ebenso eine Schraub- oder Nietverbindung zum Einsatz kommen (nicht dargestellt).

Der erste Abschnitt im Sinne der Patentansprüche wird dabei durch das Sechseck Profil 8 gebildet. Der zweite Abschnitt im Sinne der Patentansprüche entspricht dabei dem U-förmigen Profilabschnitt 6. Die Abschnitte werden durch das Element 10 voneinander getrennt.

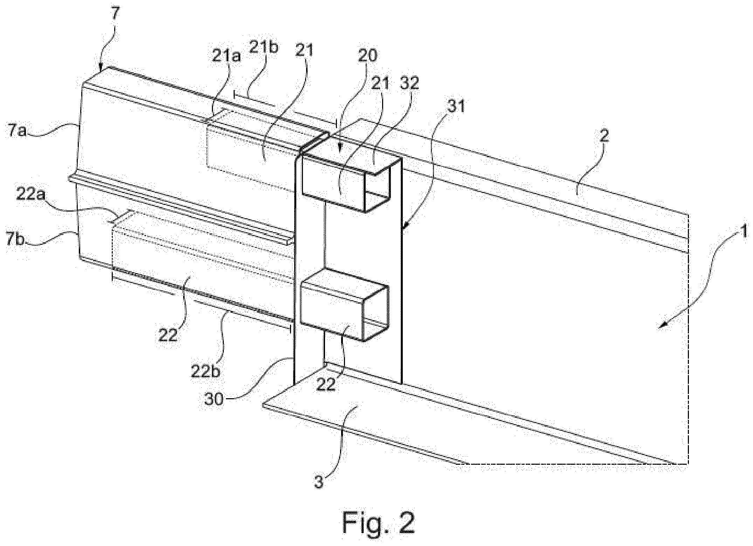

Fig. 2 zeigt eine alternative Ausbildung des Anschlussprofils. Dabei wird der Triebkopfrahmen 7 an das Z-Profil 1 über ein Anschlussprofil 20 angebunden. Das Anschlussprofil 20 umfasst zwei rohrförmige Elemente 21 und 22 35 (im Inneren des Triebkopfrahmens 7 gestrichelt dargestellt), wobei ein oberes rohrförmiges Element 21 in ein oberes U-Profil 7a des Triebkopfrahmens 7 und ein unteres rohrförmiges Element 22 in ein unteres U-Profil 7b des Triebkopfrahmens 7 eingreift. Die Querschnitte 21a und 22a der rohrförmigen Elemente 21 und 22 sind derart auf die Sohlen der U-Profile 7a und 7b abgestimmt, dass ein Formschluss gegen seitliches Verschwenken erzielt werden kann. Auf diese Weise wird die Positionierung verbessert und eine Befestigung durch Verschrauben, Vernieten, Verkleben oder Verschweißen (nicht dargestellt) optimiert.

Die rohrförmigen Elemente 21 und 22 ragen in Abschnitte 21b und 22b in die jeweiligen U-Profile 7a und 7b hinein, wobei die Abschnitte unterschiedlich dimensioniert sein können, wie vorliegend dargestellt. Auf diese Weise können auftretende Momente der Zug- und Schubbelastung unterschiedlich gewichtet werden und eine optimierte Verbindung wird bereitgestellt.

Ein Element 30, welches den Triebkopfrahmen abschließt, und als Kragen bzw. Anschlag zum Einschub dienen kann, ist ebenfalls vorgesehen. Das Element 30 kann einstückig oder mehrteilig mit einem Profilabschnitt 31 ausgebildet sein, 20 welcher zur Befestigung an dem Z-Profil 1 dient. Die rohrförmigen Elemente 21 und 22 sind mit dem Profilabschnitt 31 verbunden und treten durch das Element 30 hindurch. Eine Anbindung des Z-Profils 1 erfolgt entweder nur gegenüber dem Profilabschnitt 31, oder es erfolgt eine Verbindung, z.B. über Schrauben oder ähnliches, durch den Profilabschnitt 31 sowie die rohrförmigen Elemente 21 und 22. Es ist auch alternativ denkbar (jedoch nicht dargestellt), dass die rohrförmigen Elemente auf Seiten des Triebkopfrahmens 7 stumpf auf das Element 30 stoßen, dort enden, und somit nicht durch das Element 30 hindurchragen.

Insgesamt können das Element 30, der Profilabschnitt 31, sowie ein Winkelelement 32, welches auch unterhalb des unteren Schenkels 3 vorgesehen sein kann (nicht dargestellt) das Z-Profil zumindest teilweise formschlüssig aufnehmen, um eine hohe Stabilität bereit zu stellen.

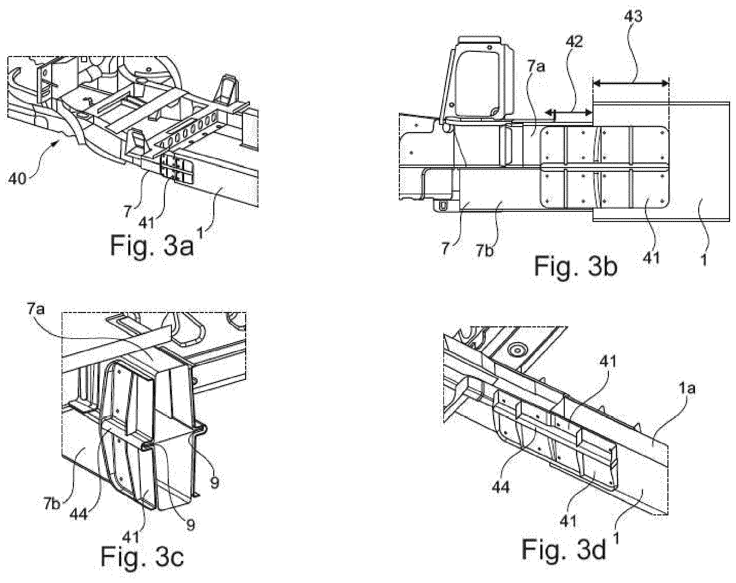

In Fig. 3a bis 3d ist eine weitere Ausführungsform dargestellt, welche unter Einsatz von Verbindungsplatten eine Verbindung ausbildet.

Ein Triebkopf 40 ist dabei über den Triebkopfrahmen 7 mit einer Anordnung von jeweils zwei Z-Profilen 1 und 1a auf jeder Längsseite des Chassis verbunden. Die Verbindung wird vorliegend durch Verbindungsplatten 41 bereitgestellt, welche z.B. mit dem Triebkopfrahmen 7 verschraubt werden können. Die Verbindungsplatten übergreifen dabei Abschnitt 42 des Triebkopfrahmens 7 und den Abschnitt 43 des Z-Profils 1 bzw. 1a.

Der am Triebkopfrahmen 7 ausgebildete Kragen 9 zwischen den U-Profilen 7a und 7b wird in eine Nut 44 an der Verbindungsplatte 41 formschlüssig aufgenommen und bietet eine Ausbildung einer zusätzlichen Stabilität.

Die Verbindungsplatte 41 ist vorliegend bevorzugt als Druckgussplatte ausgebildet und kann über bekannte Mittel wie Schrauben, Nieten, aber auch ganz oder teilweise über Schweiß- oder Klebeverbindungen befestigt werden.

## Patentansprüche

1. Fahrzeugchassis für ein Landfahrzeug, insbesondere für ein Reisemobil oder Freizeitfahrzeug,
- wobei das Fahrzeugchassis einen Triebkopf (40), sowie ein hinteres Chassismodul umfasst,
- wobei der Triebkopf einen tragenden Triebkopfrahmen (7) mit Rahmenprofilen, insbesondere Hohlprofilen umfasst,
- wobei der Triebkopf mit dem hinteren Chassismodul über mindestens ein Flanschmittel zur Ausbildung des Fahrzeugchassis verbunden ist, und
- wobei das hintere Chassismodul tragende Komponenten aus Leichtbaumaterial umfasst und die tragenden Komponenten mindestens Bestandteil eines Rahmenmoduls mit mindestens zwei tragenden Rahmenprofilen sind und das Rahmenmodul über mindestens ein Anschlussprofil an den Treibkopfrahmen angebunden ist, wobei das Anschlussprofil einen Abschnitt des Triebkopfrahmens (7) durch Aufstecken zumindest teilweise formschlüssig aufnimmt oder in einen Abschnitt des Triebkopfrahmens (7) zumindest teilweise formschlüssig aufgenommen wird oder auf einen Abschnitt des Triebkopfrahmens (7), insbesondere auf einer Außenfläche, flächig aufgebracht wird und wobei das Anschlussprofil einen ersten Abschnitt und einen zweiten Abschnitt umfasst, wobei der erste Abschnitt eine Verbindung mit dem Abschnitt des Triebkopfrahmens ausbildet und der zweite Abschnitt eine Verbindung mit dem hinteren Chassismodul, insbesondere mit einem der Rahmenprofile ausbildet,
**dadurch gekennzeichnet,**
**dass** der erste Abschnitt mindestens ein, vorzugsweise mehrere rohrförmige (21, 22) Elemente, insbesondere Rechteckrohre umfasst, wobei die rohrförmigen Elemente (21,22) vorzugsweise unterschiedlich weit in den Abschnitt des Triebkopfrahmens (7) hineinragen und in diesem befestigt sind.

2. Fahrzeugchassis nach Anspruch 1,
**dadurch gekennzeichnet,**
**dass** das Anschlussprofil ganz oder teilweise als Hohlprofil, insbesondere Viereck-, Sechseck- oder Achteckprofil ausgebildet ist

3. Fahrzeugchassis nach Anspruch 1 oder 2,
**dadurch gekennzeichnet,**
**dass** das Anschlussprofil den Triebkopfrahmen (7) und das Rahmenmodul an Profilaußenseiten verbinden und bevorzugt mindestens eine Nut zur formschlüssigen Aufnahme eines Abschnitts des Triebkopfrahmens (7) aufweist.

4. Fahrzeugchassis nach Anspruch 1, 2 oder 3,
**dadurch gekennzeichnet,**
**dass** das Anschlussprofil mit dem Abschnitt des Triebkopfrahmens (7) verbunden, insbesondere unlösbar verklebt oder verschweißt ist oder dass das Anschlussprofil (4) mit dem Abschnitt des Triebkopfrahmens (7) verschraubt oder vernietet ist.

5. Fahrzeugchassis nach einem der vorhergehenden Ansprüche,
**dadurch gekennzeichnet,**
**dass** bei dem Anschlussprofil zwischen dem ersten Abschnitt und dem zweiten Abschnitt ein Zwischenelement, insbesondere ein Blechelement zur Aussteifung vorgesehen ist, wobei bevorzugt das Zwischenelement unter Ausbildung eines Kragens als Anschlag für den Träger des Triebkopfs vorgesehen ist.

6. Fahrzeugchassis nach einem der vorhergehenden Ansprüche,
**dadurch gekennzeichnet,**
**dass** bei dem Anschlussprofil der erste Abschnitt im Querschnitt der Profilstruktur des Abschnitts des Triebkopfrahmens (7) entspricht, wobei der Querschnitt derart vergrößert oder verkleinert ist, dass ein Aufstecken bzw. Einstecken auf bzw. in den Abschnitt des Triebkopfrahmens (7) ermöglicht ist.

7. Fahrzeugchassis nach einem der vorhergehenden Ansprüche,
**dadurch gekennzeichnet,**
**dass** das Anschlussprofil (4) als Druckgussplatte ausgebildet ist, und insbesondere eine Nut vom ersten Abschnitt bis zum zweiten Abschnitt verläuft.

## Claims

1. Vehicle chassis for a land vehicle, in particular for a mobile home or recreational vehicle,
- wherein the vehicle chassis comprises a power unit (40) and a rear chassis module,
- wherein the power unit comprises a load-bearing power unit frame (7) with frame profiles, in particular hollow profiles,
- wherein the power unit is connected to the rear chassis module via at least one flange means to form the vehicle chassis, and
- wherein the rear chassis module comprises load-bearing components made of lightweight structural material, and the load-bearing components are at least a constituent part of a frame module having at least two load-bearing frame profiles, and the frame module is attached to the power unit frame via at least one connection profile, wherein the connection profile receives a section of the power unit frame (7) at least partly in a form-fitting manner by being attached or is accommodated at least partly in a form-fitting manner in a section of the power unit frame (7) or is attached flat to a section of the power unit frame (7), in particular on an outer surface, and wherein the connection profile comprises a first section and a second section, wherein the first section forms a connection to the section of the power unit frame, and the second section forms a connection to the rear chassis module, in particular to one of the frame profiles,
**characterized in that**
the first section comprises at least one tubular element, preferably a plurality of tubular elements (21, 22), in particular rectangular tubes, wherein the tubular elements (21, 22) preferably project differently far into the section of the power unit frame (7) and are fixed in the latter.

2. Vehicle chassis according to Claim 1,
**characterized in that**
the connection profile is wholly or partly formed as a hollow profile, in particular a square, hexagonal or octagonal profile.

3. Vehicle chassis according to Claim 1 or 2,
**characterized in that**
the connection profile connects the power unit frame (7) and the frame module on profile outer sides and preferably has at least one groove for receiving a section of the power unit frame (7) in a form-fitting manner.

4. Vehicle chassis according to Claim 1, 2 or 3,
**characterized in that**
the connection profile is connected to the section of the power unit frame (7), in particular non-detachably bonded or welded, or **in that** the connection profile (4) is screwed or riveted to the section of the power unit frame (7) .

5. Vehicle chassis according to one of the preceding claims,
**characterized in that**
in the connection profile, an intermediate element, in particular a sheet-metal element, is provided between the first section and the second section for reinforcement, wherein preferably the intermediate element is provided as a stop for the carrier of the power unit, forming a collar.

6. Vehicle chassis according to one of the preceding claims,
**characterized in that**
in the connection profile, the first section corresponds in cross section to the profile structure of the section of the power unit frame (7), wherein the cross section is enlarged or reduced in such a way that it is made possible to attach it to or insert it into the section of the power unit frame (7).

7. Vehicle chassis according to one of the preceding claims,
**characterized in that** the connection profile (4) is formed as a diecast plate and, in particular, a groove extends from the first section as far as the second section.

## Revendications

1. Châssis de véhicule pour un véhicule terrestre, en particulier pour un camping-car ou un véhicule de loisir,
- dans lequel le châssis de véhicule comprend une automotrice (40), ainsi qu'un module de châssis arrière,
- dans lequel l'automotrice comprend un cadre porteur d'automotrice (7) pourvu de profilés d'encadrement, en particulier de profilés creux,
- dans lequel l'automotrice est reliée au module de châssis arrière par l'intermédiaire d'au moins un moyen de bride pour réaliser le châssis de véhicule, et
- dans lequel le module de châssis arrière comprend des composants porteurs en matériau léger, et les composants porteurs font partie au moins d'un module de cadre pourvu d'au moins deux profilés d'encadrement porteurs, et le module de cadre est relié au cadre d'automotrice par l'intermédiaire d'au moins un profilé de raccordement, dans lequel le profilé de raccordement reçoit une partie du cadre d'automotrice (7) par emmanchement au moins partiellement par complémentarité de forme ou est reçu dans une partie du cadre d'automotrice (7) au moins partiellement par complémentarité de forme ou est appliqué de manière plane sur une partie du cadre d'automotrice (7), en particulier sur une face extérieure, et dans lequel le profilé de raccordement comprend une première partie et une deuxième partie, dans lequel la première partie réalise une liaison avec la partie du cadre d'automotrice et la deuxième partie réalise une liaison avec le module de châssis arrière, en particulier avec l'un des profilés d'encadrement,
**caractérisé en ce que** la première partie comprend au moins un, de préférence plusieurs éléments tubulaires (21, 22), en particulier des tubes rectangulaires, dans lequel les éléments tubulaires (21, 22) font de préférence saillie plus ou moins loin dans la partie du cadre d'automotrice (7) et sont fixés à celle-ci.

2. Châssis de véhicule selon la revendication 1, **caractérisé en ce que** le profilé de raccordement est réalisé entièrement ou partiellement comme un profilé creux, en particulier un profilé carré, un profilé hexagonal ou un profilé octogonal.

3. Châssis de véhicule selon la revendication 1 ou 2, **caractérisé en ce que** le profilé de raccordement relie le cadre d'automotrice (7) et le module de cadre sur les faces extérieures de profilé et présente de préférence au moins une rainure pour la réception par complémentarité de forme d'une partie du cadre d'automotrice (7).

4. Châssis de véhicule selon la revendication 1, 2 ou 3, **caractérisé en ce que** le profilé de raccordement est relié à la partie du cadre d'automotrice (7), en particulier collé ou soudé de manière inamovible, ou **en ce que** le profilé de raccordement (4) est vissé ou riveté avec la partie du cadre d'automotrice (7).

5. Châssis de véhicule selon l'une quelconque des revendications précédentes, **caractérisé en ce que** sur le profilé de raccordement, entre la première partie et la deuxième partie, un élément intermédiaire, en particulier un élément de tôle, est prévu pour le renforcement, dans lequel l'élément intermédiaire est de préférence prévu en réalisant une collerette comme une butée pour le support de l'automotrice.

6. Châssis de véhicule selon l'une quelconque des revendications précédentes, **caractérisé en ce que** sur le profilé de raccordement, la première partie correspond en section transversale à la structure en profilés de la partie du cadre d'automotrice (7), dans lequel la section transversale est augmentée ou diminuée de façon à permettre un emmanchement ou un enfichage sur ou dans la partie du cadre d'automotrice (7) .

7. Châssis de véhicule selon l'une quelconque des revendications précédentes, **caractérisé en ce que** le profilé de raccordement (4) est réalisé sous la forme d'une plaque coulée sous pression, et en particulier une rainure s'étend de la première partie jusqu'à la deuxième partie.
